# EUROPEAN PATENT SPECIFICATION

(11) **EP 4 161 136 B1**
(45) Date of publication and mention of the grant of the patent: **13.11.2024**
(21) Application number: 21200124.2
(22) Date of filing: 30.09.2021
(51) Int. Cl.: H04W 28/02

(54) **INCREASED UPLINK CAPACITY FOR CAMPUS NETWORKS VIA TDD INTERFERENCE MITIGATION**
ERHÖHTE UPLINK-KAPAZITÄT FÜR CAMPUS-NETZWERKE ÜBER TDD-INTERFERENZABSCHWÄCHUNG
AUGMENTATION DE LA CAPACITÉ DE LIAISON MONTANTE POUR LES RÉSEAUX DE CAMPUS PAR L'ATTÉNUATION DES INTERFÉRENCES TDD

(43) Date of publication of application: 05.04.2023
(73) Proprietor: Deutsche Telekom AG, 53113 Bonn (DE)
(72) Inventor: BELSCHNER, Jakob, 60322 Frankfurt (DE)
(74) Representative: Vossius & Partner Patentanwälte Rechtsanwälte mbB

(56) References cited:
- US-A1- 2012 082 070
- US-A1- 2013 301 423
- US-A1- 2015 163 815

## Description

### Field of the invention

This invention relates to a system and a method for mitigating downlink to uplink interference and uplink to downlink interference in a Time Division Duplex (TDD) communications system.

### Background

Campus networks are a new development within the ecosystem of mobile networks. Current networks have been designed and deployed for offering services to the public, especially end customers. In the future, there is the possibility to augment the list of offered services by offering private networks to business customers such as, for example, Campus networks.

A Campus network can be seen as a dedicated small-scale deployment of the exiting largescale public networks. However, there are several differences when comparing them in detail. One of them is related to the type of data traffic. In public networks, most data traffic flows from the Internet towards the end customer (downlink), whereas there is little traffic in the opposite direction (uplink). This is especially the case for video streaming services. Campus networks are often used for industrial services, where different types of traffic dominate. In general, industrial traffic is not dominated by downlink traffic. In many cases even uplink traffic dominates. For example, cameras can transmit several video streams in uplink.

A Campus network can be implemented via the most recent mobile radio network technology, 5G. In the main 5G frequency band at 3.x GHz, Time Division Duplex (TDD) is applied. In this scenario, uplink and downlink transmissions take place in the same frequency band by switching in time domain.

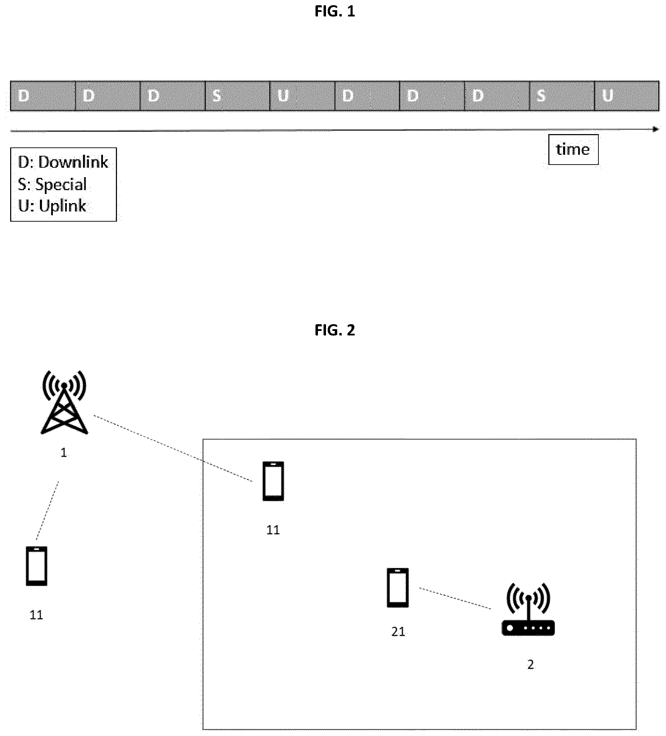

Figure 1 illustrates an example of a Time Division Duplex (TDD) frame structure. Referring to FIG. 1, within the first three slots D of the TDD frame, downlink transmission takes place. After that a special slot S is required to switch, before uplink transmission in the uplink slot U happens. Switching from uplink to downlink again requires no special slot. A special slot is required due to the transmit power imbalance of base stations (BSs) and mobile stations (MSs). In particular, base stations transmit with significantly higher transmit power than mobile stations. As a consequence of the above-mentioned transmit power imbalance, after a downlink (DL) transmission takes place, interfering signals from more distant high-power base stations can still arrive. Consequently, if an uplink (UL) transmission would take place at this point in time, it would be heavily interfered. The special slot guarantees a time-wise separation from downlink to uplink, such that no downlink signals are present at times of uplink transmission. Switching from uplink to downlink does not require this (due to lower power of uplink signals compared to downlink).

US 2012/082070 A1 and US 2013/301423 A1 are related prior art documents.

### Technical problems

In view of the above, TDD systems offer the advantage of a flexible configuration of the number of uplink and downlink slots. For the mentioned applications with high uplink requirements, it would therefore be possible to configure a high number of uplink slots and provide high uplink capacity.

However, the following problems limit the aforementioned potential advantages:
- interference within one network: if single cells or base stations are configured to use more uplink slots, significant interference may occur onto the uplink slots in times where other surrounding base stations are performing downlink transmissions.
- interference from out-of-band emissions: even in the case where there is no downlink to uplink interference within one network, downlink interference from networks in neighbouring bands (via so-called out-of-band emissions) can disturb uplink transmissions.

In more detail, the fact that TDD systems transmit and receive on the same or neighbouring frequency band results in four interference scenarios:
1) One BS transmits, while a neighbouring/near-by BS receives on the same frequency band: the receiving BS tries to receive the signals of the User Equipments (UEs) in its radio cell. Since the transmission power of the transmitting BS is significantly higher radio cell. Since the transmission power of the transmitting BS is significantly higher than that of a UE, the transmitting BS creates interference even outside its own radio cells and thus disturbs the reception of the UE signals at the neighbouring BS.
2) One BS transmits, while a neighbouring/near-by BS receives on a neighbouring frequency band: the signal energy of a radio signal is never fully restricted to the intended frequency band, but a small part of the energy, the so-call out-of-band emission, is radiated in the neighbouring frequency bands. This results in the same problems as described in 1), although this happens only in a much smaller distance.
3) One UE transmits, while a near-by UE, served by a different BS on the same frequency, is receiving: for example, two UEs located in close vicinity at the cell borders of two different radio cells which operate on the same frequency band. If one of these UEs is transmitting while the other MS is receiving, the receiving UE will suffer from the interference of the other UE's transmission.
4) One UE transmits, while a near-by UE served by a different BS on neighbouring frequency is receiving: due to the out-of-band emissions, the effect as in 3) will happen even if the two UEs operate on neighbouring frequencies.

For the sake of simplicity, the problems above have been described with respect to one network and a neighbouring network. However, there can be two networks in adjacent (upper and lower) bands. Therefore, the complexity of the problem increases.

The above problems could be avoided or mitigated, if both base stations and their respective served UEs transmit and receive at the same time. This would imply that the radio cells must be synchronized and use the same UL/DL frame structure.

This leads to the disadvantage that a network operator cannot adjust the UL/DL ratio locally according to the local traffic demand. Furthermore, a network operator must agree with the network operators of the neighbouring frequency bands on the UL/DL ratio and synchronize the frame timing. Consequently, the flexibility in adjusting UL/DL capacity to the actual traffic demand is severely limited.

As described above, Campus networks are intended to serve industrial applications which often require a higher UL capacity than typical consumer applications served by public networks. This means that it may be necessary to apply, in Campus networks, otherTDD frame structures that have more UL slots than the default frame structure used by the public networks on the adjacent frequency bands.

In the case of a system comprising at least a Campus network and a public network, where the two networks use different TDD configurations where one has more uplink slots, there are slots where the BS of the public network is transmitting in DL, while BS of the Campus network tries to receive the UL transmissions of the campus UEs. This creates two kinds of interference:
Type A) Consequence of the problems 1) and 2) mentioned above: the public network BS interferes with the signals of the campus UEs at the campus BS and degrade the UL transmissions of the campus UEs.
Type B) Consequence of the problems 3) and 4) mentioned above: the campus UEs transmit in UL, while UEs served by the public network try receiving the DL transmission of the public network's BS. In this situation, the interference of the campus UEs degrade the DL reception of the UEs in the public network. This effect is particularly strong when both UEs are located inside a building because the building penetration loss attenuates the radio signal of the public network's BS and makes it more vulnerable to the out-of-band emissions of the transmitting campus UEs.

According to the current state of the art, the negative impact of TDD interference can be minimized by the following three mechanisms:
- Coordination between public and campus networks by time-synchronization and use of the same TDD frame structures avoids simultaneous transmission of the public network in DL and the Campus network in UL. However, this has the drawback that the UL capacity of the campus network may be too low for industrial applications.
- Guard bands between the frequency bands of public and Campus network reduce the out-of-band emissions in the neighbouring band and thus the interference.

However, this has the drawback that part of the frequency spectrum cannot be used, and the overall capacity of both networks is lower.
- Slot blanking: The BSs can be configured to not use slots which are heavily interfered, or which are the source of heavy interference. However, this results in a loss of capacity.

Accordingly, it is an object of the present invention to enable the operation of campus networks with an increased number of uplink slots compared to conventional implementations, while avoiding the drawbacks of the state of the art.

Furthermore, according to the invention, it is possible that a first communications network comprising a first BS and second communications network comprising a second BS, both within the same as well as in neighbouring bands, can operate at different TDD frame structures and thus use more downlink slots.

### Summary of the invention

The above objects are achieved by the features of the independent claims. The invention is specified by the independent claims. Preferred embodiments are defined in the dependent claims.

According to an aspect of the invention there is provided a method for mitigating downlink, DL, to uplink, UL, interference in a Time Division Duplex, TDD, communications system as defined by the independent claim 1.

According to another aspect of the invention, there is provided a Time Division Duplex, TDD, communications system for mitigating downlink, DL, to uplink, UL, interference as defined by the independent claim 6.

Other aspects, features, and advantages will be apparent from the summary above, as well as from the description that follows, including the figures and the claims.

### Brief description of the drawings

In the drawings:
- FIG. 1: illustrates an exemplary Time Division Duplex (TDD) Frame structure.
- FIG. 2: illustrates an exemplary communications system for mitigating the uplink-to-downlink and downlink-to-uplink interference according to an embodiment of the invention.
- FIG. 3: illustrates an exemplary communications system for monitoring the physical isolation of a second network physically isolated from a first network according to an embodiment of the invention.

### Detailed description of the invention

### Mitigation of downlink to uplink interference

According to an embodiment of the invention, there is provided a communications system and a method which mitigates the interference of type A) as previously described.

FIG. 2 illustrates an exemplary communications system for mitigating the uplink-to-downlink interference according to an embodiment of the invention. In FIG. 2, the communications system comprises a first network and a second network.

The first network comprises at least a first base station (BS) 1 and at least one User Equipment (UE) 11 served by the first BS 1. The first BS 1 may operate at a first frequency band.

The second network may be a Campus network. The second network comprises at least a second BS 2, a network Operation and Maintenance (O&M) entity 3, and at least one UE 21 served by the second BS 2.

The second BS 2 is physically isolated in terms of radio propagation from the first BS 1 (for example, by walls providing physical outdoor to indoor isolation or any other suitable physical isolation).

In the present embodiment it is assumed that the first BS 1 is transmitting information on a first frequency band towards one or more UEs 11 served by the first BS 1 and that the second BS 2 receives information on UL time slots in a second frequency band from one or more UEs 21 served by the second BS 2.

The first frequency band and the second frequency band are in the same frequency band or are adjacent frequency bands.

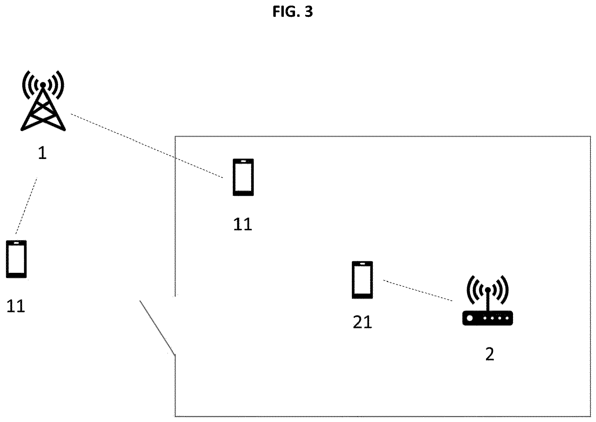

However, it is not possible to rely on such isolation, as the physical conditions can change at any time (e.g. open windows). It is therefore an aspect of the present invention to monitor the physical isolation and to trigger corresponding actions in case the physical isolation does not exist anymore. These principles are illustrated in FIG. 3 and described as follows.

FIG. 3 illustrates an exemplary scenario for monitoring the physical isolation and corresponding action in a communications system comprising a first and second network physically isolated from the first network according to an embodiment of the invention.

As shown in FIG. 3, at some point in time, a lack of isolation between the first and second base stations 1, 2 may happen, for example, due to an open window. In order to be aware of a lack of isolation, the second BS 2 has to measure, constantly or every predetermined period of time, the physical isolation.

Accordingly, the second BS 2 determines the UL time slots that are potentially affected by DL to UL interference and stops the transmission of UL scheduling grants for the UL time slots that are potentially affected by interference, such that the one or more UEs served by the second BS 2 do not transmit information during predetermined intervals in the UL time slots that are potentially affected by downlink to uplink interference.

Here, as an optional feature, the determination, by the second BS 2, of which uplink time slots are potentially affected by downlink to uplink interference may comprise the following steps/actions depending on whether the second BS 2 has knowledge or not of the TDD frame configuration information and start time information of the TDD frame of the first BS 1.

In particular, if the second BS 2 has knowledge of TDD frame configuration information and start time information of the TDD frame of the first BS 1, the second BS 2 checks if the uplink time slots of the first BS 1 and the second BS 2 are not aligned. The term aligned means that in all slots in which the seconds BS 2 receives data from its UEs in uplink, also the first BS 1 receives data in uplink. If they are not aligned, the second BS 2 determines which uplink time slots are potentially affected by downlink to uplink interference. If they are aligned, the slots are potentially not affected by downlink to uplink interference.

Alternatively, if the BS does not have knowledge of TDD frame configuration information and start time information of the TDD frame, the second BS 2 may determine that all uplink time slots are potentially affected by downlink to uplink interference.

Once the UEs stop transmitting information, because they do not have any scheduling grants for the UL time slots that are potentially affected by interference, the second BS 2 can measure a level of interference received within the uplink time slots that are potentially affected by downlink to uplink interference.

Thereafter, the second BS 2 calculates the level of isolation based on the measured level of interference of the uplink time slots and an expected level of interference of the uplink time slots.

For example, the expected level of interference may be a level of interference as measured during installation of the second communications network and/or second BS 2. Alternatively, the expected level of interference may be predetermined.

By comparing the measured level of interference with the expected one (e.g. measured throughout the installation), a higher interference (e.g. resulting from lacking isolation due to an open window) can be detected.

After measuring the level of interference, the second BS 2 can determine if the measured level of isolation is critical. To do so, the second BS 2 compares the measured level of isolation with a predetermined threshold.

If, as result of the above comparison, it is determined that the measured level of isolation is critical, the second BS 2 is configured to perform, as long as the measured level of isolation is critical, one or more of the following actions:
- Stop transmission, in future frames, of UL scheduling grants for the one or more interfered UL time slots. Alternatively, the second BS 2 may schedule, in future frames, the one or more interfered time slots only for less critical data. For example, less critical data may be data that can be re-transmitted in case of errors.
- Usage of a lower the Modulation and Coding Scheme (MCS) for the one or more interfered uplink time slots.
- Schedule, in future frames, the one or more interfered uplink time slots only for UEs close to the second BS 2 that are received with a high-power level. For example, this can mean that a path loss between the second BS 2 and the UE is below a predetermined threshold such that the detected interference is acceptable.
- Informing, to the O&M entity, that the measured level of isolation is critical.

Parallelly, the second BS 2 may continuously monitor/measure the level of isolation as described above, until it determines that the measured level of isolation is not critical anymore. Once the level of isolation is not critical, the second BS 2 may revert all the actions that were taken when the level of isolation was critical.

Additionally, as an optional feature, the second BS 2 may also determine whether the measured level of isolation has been critical during more than a predetermined period of time and perform additional actions accordingly. For example, in case that the second BS 2 determines that the level of isolation has been critical during an extended period of time, the second BS 2 may inform to the network Operation and Maintenance (O&M) entity that the measured level of isolation has been critical more than a predetermined period of time. In addition, the second BS 2 may stop using the one or more interfered uplink time slots until the measured level of isolation becomes not critical.

Additionally, as an optional feature, after the second BS 2 determines that the measured level of isolation has been critical more than a predetermined period of time, the second BS 2 may send a message towards the first BS 1 comprising an indication to: reduce power on selected beams or apply slot blanking.

### Mitigation of uplink to downlink interference

According to an embodiment of the invention, there is provided a communications system and a method which mitigates the interference of type B) as previously described.

The physical isolation described above does not mitigate the interference of type B (uplink to downlink interference). Instead a novel scheduling algorithm in the BSs of the network which is subject to the interference (i.e. the public network) mitigates such interference.

FIG. 2 also illustrates an exemplary communications system for mitigating the downlink-to-uplink interference comprising a first and second network according to this embodiment of the invention.

Again, in FIG. 2, the first network comprises at least a first base station (BS) 1 and at least one User Equipment (UE) 11 served by the first BS 1. The first BS 1 may operate at a first frequency band.

The second network may be a Campus network. The second network comprises at least a second BS 2, a network Operation and Maintenance (O&M) entity 3, and at least one UE 21 served by the second BS 2.

However, in this case, the physical isolation described above does not mitigate the interference of type B (uplink to downlink interference). Instead a novel scheduling algorithm in the first BSs of the network which is subject to the interference (i.e. the public network) mitigates such interference.

In the present embodiment it is assumed that the at least one UE 11 served by the first BS 1 receives information on a first frequency band from the first BS 1, and that the at least one UE 21 served by the second BS 2 transmits information on a second frequency band to the second BS 2.

The first frequency band and the second frequency band may be the same frequency band or may be adjacent frequency bands.

The first BS 1 continuously checks the information feedback by the one or more UEs 11.

Here, the information feedback by the one or more UEs 11 may be, for example, acknowledgments (ACKs) and/or negative acknowledgements (NACKs) that refer to previous transmissions from the first BS 1 to the at least one UE 11.

Based on the feedback information, the first BS 1 determines, for each UE 11 served by the first BS 1, whether the UE 11 is subject to uplink to downlink interference.

The first BS 1 determines which uplink time slots are potentially subject to uplink to downlink interference by detecting whether the first BS 1 and the one or more UEs 11 served by the first BS 1 are not aligned with the second BS 2 and the one or more UEs 21 served by the second BS 2. Being not aligned means, for example, that a UE 11 served by the first BS 1 is receiving in a downlink time slot and a UE 21 served by the second BS 2 is transmitting in an uplink time slot or vice-versa.

Thereafter, the first BS 1 creates a prediction of future slots that will also be subject to uplink to downlink interference based on the slots determined not aligned. This is possible due to the use of TDD frames. In more detail it is possible, because the TDD frame is continuously repeated (after frame 1 ends, frame 2 of the same structure starts).

Based on the above, the first BS 1 optimizes the future usage of the slots.

For example, optimizing the future usage of the slots may comprise scheduling slots that are potentially interfered to one or more UEs 11 that are not subject to uplink to downlink interference.

Besides, optimizing the future usage of the slots may comprise scheduling slots that are not potentially subject to uplink to downlink interference to one or more UEs 11 that are subject to uplink to downlink interference.

In an alternative implementation of the novel scheduling algorithm, the first BS or BSs of the first network (e.g. the public network) are preconfigured with the information of which slots could be subject to interference. In this case the steps of continuously checking the information feedback by the one or more UEs 11 and determining which uplink time slots are potentially subject to uplink to downlink interference would not be needed.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for mitigating downlink, DL, to uplink, UL, interference in a Time Division Duplex, TDD, communications system, the communications system comprising: a first communications network comprising a first base station, BS, (1) and one or more user equipment, UEs, (11) served by the first BS (1); and second communications network comprising a second BS (2), one or more user equipment, UEs, (21) served by the second BS (2) and a network Operation and Maintenance, O&M, entity, wherein the second BS (2) is physically isolated from the first BS (1) in terms of radio propagation, the method comprising the steps of:
transmitting, by the first BS (1) towards one or more UEs (11) served by the first BS (1), information on a first frequency band, and receiving, by the second BS (2) from one or more UEs (21) served by the second BS (2), information on UL time slots in a second frequency band, wherein the first frequency band and the second frequency band are in the same frequency band or are adjacent frequency bands;
measuring, by the second BS (2), a level of isolation from the first BS (1) by:
determining, by the second BS (2), UL time slots that are potentially affected by DL to UL interference,
stopping transmission, by the second BS (2), of UL scheduling grants for the UL time slots that are potentially affected by interference, such that the one or more UEs (21) served by the second BS (2) do not transmit information during predetermined intervals in the UL time slots that are potentially affected by downlink to uplink interference,
measuring a level of interference received within the uplink time slots potentially affected by downlink to uplink interference, and
calculating the level of isolation based on the measured level of interference of the uplink time slots and an expected level of interference of the uplink time slots;
determining, by the second BS (2), if the measured level of isolation is critical by comparing the measured level of isolation with a predetermined threshold,
wherein in case that it is determined that the measured level of isolation is critical the second BS (2) performs, as long as the measured level of isolation is critical, one or more of the following steps:
stopping transmission, in future frames, of UL scheduling grants for the one or more interfered UL time slots; and/or scheduling, in future frames, the one or more interfered time slots only for less critical data, wherein less critical data is data that can be re-transmitted in case of errors; and/or
lowering a Modulation and Coding Scheme, MCS, for the one or more interfered uplink time slots; and/or
scheduling, in future frames, the one or more interfered uplink time slots only for UEs (21) close to the second BS (2) that are received with a high-power level, wherein a UE (21) close to the second BS (2) that receives with a high-power level means that a path loss between the second BS (2) and the UE (21) is below a predetermined threshold; and/or
informing, to the O&M entity, that the measured level of isolation is critical, and
repeating the step of measuring the level of isolation and, if it is determined that the measured level of isolation is not critical anymore, reverting the previous one or more steps performed when the level of isolation was critical.

2. The method of claim 1, further comprising:
determining, by the second BS (2), whether the measured level of isolation has been critical for more than a predetermined period of time and, in case that it has been critical for more than a predetermined period of time, performing the following steps:
informing, by the second BS (2) to the O&M entity, that the measured level of isolation has been critical for more than a predetermined period of time; and
stopping use of the one or more interfered uplink time slots until the measured level of isolation becomes not critical.

3. The method of claim 1 or 2, wherein the expected level of interference is a level of interference as measured during installation of the second communications network and/or second BS (2), or is predetermined.

4. The method of any one of claims 1 to 3, wherein after determining, by the second BS (2), that the measured level of isolation has been critical for more than a predetermined period of time, the method further comprises:
sending, by the second BS (2), a message towards the first BS (1), wherein the message comprises an indication to: reduce power on selected beams or apply slot blanking.

5. The method of claims 1 to 4, wherein determining, by the second BS (2), uplink time slots that are potentially affected by downlink to uplink interference comprises:
if the second BS (2) has knowledge of TDD frame configuration information and start time information of the TDD frame of the first BS (1):
checking, by the second BS (2), if the uplink time slots of the first BS (1) and the second BS (2) are not aligned, and
if they are not aligned, determining, by the second BS (2), which uplink time slots are potentially affected by downlink to uplink interference,
if the BS does not have knowledge of TDD frame configuration information and start time information of the TDD frame:
determining, by the second BS (2), that all uplink time slots are potentially affected by downlink to uplink interference.

6. A Time Division Duplex, TDD, communications system for mitigating downlink, DL, to uplink, UL, interference, the communications system comprising: a first communications network comprising a first base station, BS, (1) and one or more user equipment, UEs, (11) served by the first BS (1); and second communications network comprising a second BS (2), one or more user equipment, UEs, (21) served by the second BS (2) and a network Operation and Maintenance, O&M, entity, wherein the second BS (2) is physically isolated from the first BS (1) in terms of radio propagation, wherein:
the first BS (1) is configured to transmit towards one or more UEs (11) served by the first BS (1), information on a first frequency band, and the second BS (2) is configured to receive from one or more UEs (21) served by the second BS (2), information on UL time slots in a second frequency band, wherein the first frequency band and the second frequency band are in the same frequency band or are adjacent frequency bands;
the second BS (2) is configured to measure, a level of isolation by being configured to:
determine UL time slots that are potentially affected by DL to UL interference,
stop transmission of UL scheduling grants for the UL time slots that are potentially affected by interference, such that the one or more UEs (21) served by the second BS (2) do not transmit information during predetermined intervals in the UL time slots that are potentially affected by downlink to uplink interference,
measure a level of interference received within the uplink time slots potentially affected by downlink to uplink interference, and
calculate the level of isolation based on the measured level of interference of the uplink time slots and an expected level of interference of the uplink time slots;
the second BS (2) is configured to compare if the measured level of isolation is critical by comparing the measured level of isolation with a predetermined threshold,
wherein in case that it is determined that the measured level of isolation is critical the second BS (2) is configured to perform, as long as the measured level of isolation is critical, one or more of the following actions:
stop transmission, in future frames, of UL scheduling grants for the one or more interfered UL time slots; and/or scheduling, in future frames, the one or more interfered time slots only for less critical data, wherein less critical data is data that can be re-transmitted in case of errors; and/or
lower a Modulation and Coding Scheme, MCS, for the one or more interfered uplink time slots; and/or
schedule, in future frames, the one or more interfered uplink time slots only for UEs (21) close to the second BS (2) that are received with a high-power level, wherein a UE (21) close to the second BS (2) that receives with a high-power level means that a path loss between the second BS (2) and the UE (21) is below a predetermined threshold; and/or
inform, to the O&M entity, that the measured level of isolation is critical, and
repeat the measurement of the level of isolation and, if it is determined that the measured level of isolation is not critical anymore, revert the previous one or more actions performed when the level of isolation was critical.

## Patentansprüche

1. Verfahren zur Abschwächung einer Downlink-, DL, -Uplink-, UL, Interferenz in einem Zeitmultiplex-, TDD, Kommunikationssystem, wobei das Kommunikationssystem aufweist: ein erstes Kommunikationsnetzwerk, das eine erste Basisstation, BS, (1) und ein oder mehrere Benutzergeräte, UEs, (11) aufweist, die von der ersten BS (1) bedient werden, und ein zweites Kommunikationsnetzwerk, das eine zweite BS (2), ein oder mehrere Benutzergeräte, UEs, (21), die von der zweiten BS (2) bedient werden, und eine Netzbetriebs- und Wartungs-, O&M, Einheit aufweist, wobei die zweite BS (2) von der ersten BS (1) hinsichtlich der Funkausbreitung physikalisch isoliert ist, wobei das Verfahren die Schritte aufweist:
Übertragen durch die erste BS (1) zu einem oder mehreren UEs (11), die von der ersten BS (1) bedient werden, von Informationen über ein erstes Frequenzband und Empfangen von Informationen durch die zweite BS (2) von einem oder mehreren UEs (21), die von der zweiten BS (2) bedient werden, über UL-Zeitschlitze in einem zweiten Frequenzband, wobei das erste Frequenzband und das zweite Frequenzband im selben Frequenzband liegen oder benachbarte Frequenzbänder sind,
Messen, durch die zweite BS (2), eines Isolationspegels von der ersten BS (1) durch:
Bestimmen von UL-Zeitschlitzen durch die zweite BS (2), die potentiell von einer DL-UL-Interferenz betroffen sind,
Stoppen der Übertragung durch die zweite BS (2) von UL-Planungsgenehmigungen für die UL-Zeitschlitze, die potentiell durch eine Interferenz betroffen sind, so dass das eine oder die mehreren UEs (21), die von der zweiten BS (2) bedient werden, während vorbestimmter Intervalle in den UL-Zeitschlitzen, die potentiell von einer Downlink -Uplink-Interferenz betroffen sind, keine Informationen übertragen,
Messen eines Interferenzpegels, der innerhalb der Uplink-Zeitschlitze empfangen wird, die potentiell von einer Downlink-Uplink-Interferenz betroffen sind, und
Berechnen des Isolationspegels basierend auf dem gemessenen Interferenzpegel der Uplink-Zeitschlitze und einem erwarteten Interferenzpegel der Uplink-Zeitschlitze;
Bestimmen, durch die zweite BS (2), ob der gemessene Isolationspegel kritisch ist, indem der gemessene Isolationspegel mit einem vorbestimmten Schwellenwert verglichen wird, wobei falls festgestellt wird, dass der gemessene Isolationspegel kritisch ist, die zweite BS (2), solange der gemessene Isolationspegel kritisch ist, einen oder mehrere der folgenden Schritte durchführt:
Stoppen der Übertragung in zukünftigen Rahmen von UL-Planungsgenehmigungen für den einen oder die mehreren gestörten UL-Zeitschlitze, und/oder Planen in zukünftigen Rahmen des einen oder der mehreren gestörten Zeitschlitze nur für weniger kritische Daten, wobei weniger kritische Daten Daten sind, die im Falle von Fehlern erneut übertragen werden können; und/oder
Absenken eines Modulations- und Codierungsschemas, MCS, für den einen oder die mehreren gestörten Uplink-Zeitschlitze; und/oder
Planen in zukünftigen Rahmen des einen oder der mehreren gestörten Uplink-Zeitschlitze nur für UEs (21) in der Nähe der zweiten BS (2), die mit einem hohen Leistungspegel empfangen werden, wobei ein UE (21) in der Nähe der zweiten BS (2), das mit einem hohen Leistungspegel empfängt, bedeutet, dass ein Pfadverlust zwischen der zweiten BS (2) und dem UE (21) unter einem vorbestimmten Schwellenwert liegt; und/oder
Informieren der O&M-Einheit, dass der gemessene Isolationspegel kritisch ist, und Wiederholen des Schritts des Messens des Isolationspegels und, wenn festgestellt wird, dass das gemessene Isolationspegel nicht mehr kritisch ist, Rückgängigmachen des vorherigen einen oder der mehreren Schritte, die durchgeführt wurden, als der Isolationspegel kritisch war.

2. Verfahren nach Anspruch 1, das ferner aufweist
Bestimmen, durch die zweite BS (2), ob der gemessene Isolationspegel für mehr als eine vorbestimmte Zeitspanne kritisch war, und, falls er für mehr als eine vorbestimmte Zeitspanne kritisch war, Durchführen der folgenden Schritte:
Mitteilen durch die zweite BS (2) an die O&M-Einheit, dass der gemessene Isolationspegel für mehr als eine vorbestimmte Zeitspanne kritisch war, und
Stoppen der Nutzung des einen oder der mehreren gestörten Uplink-Zeitschlitze, bis der gemessene Isolationsgrad nicht mehr kritisch ist.

3. Verfahren nach Anspruch 1 oder 2, wobei der erwartete Interferenzpegel ein Interferenzpegel ist, der während der Installation des zweiten Kommunikationsnetzwerks und/oder der zweiten BS (2) gemessen wurde, oder vorbestimmt ist.

4. Verfahren nach einem der Ansprüche 1 bis 3, wobei nach dem Bestimmen durch die zweite BS (2), dass der gemessene Isolationspegel für mehr als eine vorbestimmte Zeitspanne kritisch war, das Verfahren ferner aufweist:
Senden durch die zweite BS (2) an die erste BS (1) einer Nachricht, wobei die Nachricht eine Anzeige aufweist, um: die Leistung auf ausgewählten Strahlen zu reduzieren oder eine Schlitzausblendung anzuwenden.

5. Verfahren nach einem der Ansprüche 1 bis 4, wobei das Bestimmen durch die zweite BS (2), von Uplink-Zeitschlitzen die potentiell von einer Downlink-Uplink-Interferenz betroffen sind, aufweist:
wenn die zweite BS (2) Kenntnis von TDD-Rahmenkonfigurations-Informationen und Startzeitinformationen des TDD-Rahmens der ersten BS (1) hat:
Prüfen, durch den zweiten BS (2), ob die Uplink-Zeitschlitze des ersten BS (1) und des zweiten BS (2) nicht aufeinander abgestimmt sind, und
wenn sie nicht aufeinander abgestimmt sind, Bestimmen durch die zweite BS (2), welche Uplink-Zeitschlitze möglicherweise von einer Downlink-Uplink-Interferenz betroffen sind,
wenn die BS keine Kenntnis von TDD-Rahmenkonfigurations-Informationen und Startzeitinformationen des TDD-Rahmens hat:
Bestimmen durch die zweite BS (2), dass alle Uplink-Zeitschlitze potentiell von einer Downlink-Uplink-Interferenz betroffen sind.

6. Zeitmultiplex-Duplex-, TDD, Kommunikationssystem zur Abschwächung einer Downlink-, DL, -Uplink-, UL, Interferenz, wobei das Kommunikationssystem aufweist:
ein erstes Kommunikationsnetzwerk, das eine erste Basisstation, BS, (1) und ein oder mehrere Benutzergeräte, UEs, (11) aufweist, die von der ersten BS (1) bedient werden,
und ein zweites Kommunikationsnetzwerk, das eine zweite BS (2), ein oder mehrere Benutzergeräte, UEs, (21), die von der zweiten BS (2) bedient werden, und eine Netzbetriebs- und Wartungs-, O&M, Einheit aufweist, wobei die zweite BS (2) von der ersten BS (1) hinsichtlich der Funkausbreitung physikalisch isoliert ist, wobei:
die erste BS (1) konfiguriert ist, zu einem oder mehreren UEs (11), die von der ersten BS (1) bedient werden, Informationen auf einem ersten Frequenzband zu übertragen, und die zweite BS (2) konfiguriert ist, von einem oder mehreren UEs (21), die von der zweiten BS (2) bedient werden, Informationen über UL-Zeitschlitze in einem zweiten Frequenzband zu empfangen, wobei das erste Frequenzband und das zweite Frequenzband im selben Frequenzband liegen oder benachbarte Frequenzbänder sind,
die zweite BS (2) konfiguriert ist, einen Isolationspegel zu messen, indem sie konfiguriert ist, um:
UL-Zeitschlitze zu bestimmen, die potentiell durch eine DL-UL-Interferenz betroffen sind,
die Übertragung von UL-Planungsgenehmigungen für die UL-Zeitschlitze zu stoppen, die potentiell von einer Interferenz betroffen sind, so dass das eine oder die mehreren UEs (21), die von der zweiten BS (2) bedient werden, während vorbestimmter Intervalle in den UL-Zeitschlitzen, die potentiell von Downlink-Uplink-Interferenz betroffen sind, keine Informationen übertragen,
einen Interferenzpegel zu messen, der innerhalb der Uplink-Zeitschlitze empfangen wird, die potentiell von Downlink-Uplink-Interferenz betroffen sind, und
den Isolationspegel basierend auf dem gemessenen Interferenzpegel der Uplink-Zeitschlitze und einem erwarteten Interferenzpegel der Uplink-Zeitschlitze zu berechnen;
die zweite BS (2) konfiguriert ist, zu bestimmen, ob der gemessene Isolationspegel kritisch ist, indem sie den gemessenen Isolationspegel mit einem vorbestimmten Schwellenwert vergleicht,
wobei falls festgestellt wird, dass der gemessene Isolationspegel kritisch ist, die zweite BS (2) konfiguriert ist, solange der gemessene Isolationspegel kritisch ist, eine oder mehrere der folgenden Aktionen durchzuführen:
die Übertragung in zukünftigen Rahmen von UL-Planungsgenehmigungen für den einen oder die mehreren gestörten UL-Zeitschlitze zu stoppen, und/oder in zukünftigen Rahmen den einen oder die mehreren gestörten Zeitschlitze nur für weniger kritische Daten zu planen, wobei weniger kritische Daten Daten sind, die im Falle von Fehlern erneut übertragen werden können; und/oder
ein Modulations- und Codierungsschema, MCS, für den einen oder die mehreren gestörten Uplink-Zeitschlitze abzusenken; und/oder
in zukünftigen Rahmen den einen oder die mehreren gestörten Uplink-Zeitschlitze nur für UEs (21) nahe der zweiten BS (2) zu planen, die mit einem hohen Leistungspegel empfangen werden, wobei ein UE (21) nahe der zweiten BS (2), das mit einem hohen Leistungspegel empfängt, bedeutet, dass ein Pfadverlust zwischen der zweiten BS (2) und dem UE (21) unter einem vorbestimmten Schwellenwert liegt; und/oder
der O&M-Einheit mitzuteilen, dass der gemessene Isolationspegel kritisch ist, und die Messung des Isolationspegels zu wiederholen und, wenn festgestellt wird, dass der gemessene Isolationspegel nicht mehr kritisch ist, die vorherige eine oder mehreren Aktionen, die durchgeführt wurden, als der Isolationspegel kritisch war, rückgängig zu machen.

## Revendications

1. Procédé d'atténuation d'interférence de liaison descendante, DL, vers une liaison montante, UL, dans un système de communication duplex à répartition dans le temps, TDD, ledit système de communication comprenant : un premier réseau de communication comprenant une première station de base, BS, (1), et un ou plusieurs équipements utilisateur, UE, (11), desservis par la première BS (1) ; et un deuxième réseau de communication comprenant une deuxième BS (2), un ou plusieurs équipements utilisateur, UE, (21), desservis par la deuxième BS (2), et une entité d'exploitation et de maintenance du réseau, O&M, la deuxième BS (2) étant physiquement isolée de la première BS (1) en termes de propagation radio, ledit procédé comprenant les étapes suivantes :
transmission, par la première BS (1) vers un ou plusieurs UE (11) desservis par la première BS (1), d'informations sur une première bande de fréquences, et réception, par la deuxième BS (2), en provenance d'un ou de plusieurs UE (21) desservis par la deuxième BS (2), d'informations sur des créneaux temporels UL dans une deuxième bande de fréquences, la première bande de fréquences et la deuxième bande de fréquences étant dans la même bande de fréquences ou dans des bandes de fréquences adjacentes ;
mesure, par la deuxième BS (2), d'un niveau d'isolation de la première BS (1), par :
détermination, par la deuxième BS (2), de créneaux temporels UL potentiellement affectés par une interférence DL-UL,
arrêt de la transmission, par la deuxième BS (2), d'autorisations de planification UL pour les créneaux temporels UL potentiellement affectés par une interférence, de sorte que le ou les UE (21) desservis par la deuxième BS (2) ne transmettent pas d'informations pendant des intervalles prédéterminés dans des créneaux temporels UL potentiellement affectés par une interférence liaison descendante-liaison montante,
mesure d'un niveau d'interférence reçu dans les créneaux temporels de liaison montante potentiellement affectés par une interférence liaison descendante-liaison montante, et
calcul du niveau d'isolation sur la base du niveau d'interférence mesuré des créneaux temporels de liaison montante et d'un niveau d'interférence attendu des créneaux temporels de liaison montante ;
détermination, par la deuxième BS (2), si le niveau d'isolation mesuré est critique par comparaison du niveau d'isolation mesuré à un seuil prédéterminé, où, s'il est déterminé que le niveau d'isolation mesuré est critique, la deuxième BS (2) exécute, tant que le niveau d'isolation mesuré est critique, une ou plusieurs des étapes suivantes :
arrêt de la transmission, dans les trames futures, des autorisations de planification UL pour le ou les créneaux temporels UL brouillés ; et/ou planification, dans les trames futures, du ou des créneaux temporels brouillés uniquement pour des données moins critiques, lesdites données moins critiques étant des données pouvant être retransmises en cas d'erreurs ; et/ou
abaissement d'un schéma de modulation et de codage, MCS, pour le ou les créneaux temporels de liaison montante brouillés ; et/ou
planification, dans les trames futures, du ou des créneaux temporels de liaison montante brouillée uniquement pour les UE (21) proches de la deuxième BS (2) reçus avec un niveau de puissance élevé, un UE (21) proche de la deuxième BS (2) recevant avec un niveau de puissance élevé signifiant qu'une perte de trajet entre la deuxième BS (2) et l'UE (21) est inférieure à un seuil prédéterminé ; et/ou
information à l'entité O&M que le niveau d'isolation mesuré est critique, et
répétition de l'étape de mesure du niveau d'isolation et, s'il est déterminé que le niveau d'isolation mesuré n'est plus critique, retour à la ou aux étapes précédentes exécutées lorsque le niveau d'isolation était critique.

2. Procédé selon la revendication 1, comprenant en outre :
la détermination, par la deuxième BS (2), si le niveau d'isolation mesuré a été critique pendant une durée supérieure à une période de temps prédéterminée et, dans le cas où il a été critique pendant une durée supérieure à une période de temps prédéterminée, l'exécution des étapes suivantes :
information de l'entité O&M par la deuxième BS (2) que le niveau d'isolation mesuré a été critique pendant une durée supérieure à une période de temps prédéterminée ; et
arrêt de l'utilisation du ou des créneaux de liaison montante brouillés jusqu'à ce que le niveau d'isolation mesuré ne soit plus critique.

3. Procédé selon la revendication 1 ou la revendication 2, où le niveau d'interférence attendu est un niveau d'interférence mesuré lors de l'installation du deuxième réseau de communication et/ou de la deuxième BS (2), ou est prédéterminé.

4. Procédé selon l'une des revendications 1 à 3, où, après détermination, par la deuxième BS (2), que le niveau d'isolation mesuré a été critique pendant une durée supérieure à une période de temps prédéterminée, ledit procédé comprend en outre :
l'envoi, par la deuxième BS (2), d'un message à la première BS (1), ledit message comprenant une indication pour : réduire la puissance sur des faisceaux sélectionnés ou appliquer une suppression de créneau.

5. Procédé selon les revendications 1 à 4, où la détermination, par la deuxième BS (2), des créneaux temporels de liaison montante potentiellement affectés par une interférence liaison descendante-liaison montante comprend :
si la deuxième BS (2) a connaissance d'informations de configuration de trame TDD et d'informations sur le temps de commencement de la trame TDD de la première BS (1) :
la vérification, par la deuxième BS (2), si les créneaux temporels de liaison montante de la première BS (1) et de la deuxième BS (2) ne sont pas alignés, et
si ceux-ci ne sont pas alignés, la détermination, par la deuxième BS (2), des créneaux temporels de liaison montante potentiellement affectés par une interférence liaison descendante-liaison montante,
si la BS n'a pas connaissance d'informations de configuration de la trame TDD et d'informations sur le temps de commencement de la trame TDD :
la détermination, par la deuxième BS (2), que tous les créneaux temporels de liaison montante sont potentiellement affectés par une interférence liaison descendante-liaison montante.

6. Système de communication duplex à répartition dans le temps, TDD, pour l'atténuation d'interférence de liaison descendante, DL, vers une liaison montante, UL, ledit système de communication comprenant : un premier réseau de communication comprenant une première station de base, BS, (1), et un ou plusieurs équipements utilisateur, UE, (11), desservis par la première BS (1) ; et un deuxième réseau de communication comprenant une deuxième BS (2), un ou plusieurs équipements utilisateur, UE, (21), desservis par la deuxième BS (2), et une entité d'exploitation et de maintenance du réseau, O&M, la deuxième BS (2) étant physiquement isolée de la première BS (1) en termes de propagation radio, où :
la première BS (1) est configurée pour transmettre à un ou plusieurs UE (11) desservis par la première BS (1), des informations sur une première bande de fréquences, et la deuxième BS (2) est configurée pour recevoir d'un ou de plusieurs UE (21) desservis par la deuxième BS (2), des informations sur des créneaux temporels UL dans une deuxième bande de fréquences, la première bande de fréquences et la deuxième bande de fréquences étant dans la même bande de fréquences ou dans des bandes de fréquences adjacentes ;
la deuxième BS (2) est configurée pour mesurer un niveau d'isolation en étant configurée pour :
déterminer des créneaux temporels UL potentiellement affectés par une interférence DL-UL,
arrêter la transmission d'autorisations de planification UL pour les créneaux temporels UL potentiellement affectés par une interférence, de sorte que le ou les UE (21) desservis par la deuxième BS (2) ne transmettent pas d'informations pendant des intervalles prédéterminés dans des créneaux temporels UL potentiellement affectés par une interférence liaison descendante-liaison montante, mesurer un niveau d'interférence reçu dans les créneaux temporels de liaison montante potentiellement affectés par une interférence liaison descendante-liaison montante, et
calculer le niveau d'isolation sur la base du niveau d'interférence mesuré des créneaux temporels de liaison montante et d'un niveau d'interférence attendu des créneaux temporels de liaison montante ;
la deuxième BS (2) est configurée pour déterminer si le niveau d'isolation mesuré est critique par comparaison du niveau d'isolation mesuré à un seuil prédéterminé,
où, s'il est déterminé que le niveau d'isolation mesuré est critique, la deuxième BS (2) est configurée pour exécuter, tant que le niveau d'isolation mesuré est critique, une ou plusieurs des opérations suivantes :
arrêt de la transmission, dans les trames futures, des autorisations de planification UL pour le ou les créneaux temporels UL brouillés ; et/ou planification, dans les trames futures, du ou des créneaux temporels brouillés uniquement pour des données moins critiques, lesdites données moins critiques étant des données pouvant être retransmises en cas d'erreurs ; et/ou
abaissement d'un schéma de modulation et de codage, MCS, pour le ou les créneaux temporels de liaison montante brouillés ; et/ou
planification, dans les trames futures, du ou des créneaux temporels de liaison montante brouillée uniquement pour les UE (21) proches de la deuxième BS (2) reçus avec un niveau de puissance élevé, un UE (21) proche de la deuxième BS (2) recevant avec un niveau de puissance élevé signifiant qu'une perte de trajet entre la deuxième BS (2) et l'UE (21) est inférieure à un seuil prédéterminé ; et/ou
information à l'entité O&M que le niveau d'isolation mesuré est critique, et
répétition de la mesure du niveau d'isolation et, s'il est déterminé que le niveau d'isolation mesuré n'est plus critique, retour à la ou aux étapes précédentes exécutées lorsque le niveau d'isolation était critique.
